# EUROPÄISCHE PATENTSCHRIFT

(11) **EP 0 978 493 B1**
(45) Veröffentlichungstag und Bekanntmachung des Hinweises auf die Patenterteilung: **11.09.2002**
(21) Anmeldenummer: 99113296.0
(22) Anmeldetag: 09.07.1999
(51) Int. Cl.: C03C 8/02, C03C 8/14, C03C 17/04

(54) **Blei- und cadmiumfreie Glaszusammensetzung zum Glasieren, Emailieren und Dekorieren von Gläsern oder Glaskeramiken sowie Verfahren zur Herstellung einer damit Beschichteten Glaskeramik**
Lead-free and cadmium-free glass composition for glazing, enameling and decoration of glasses or glass-ceramics, and method for the production of glass-ceramics coated therewith
Composition de verre exempte de plomb et cadmium pour le glaçage, l'émaillage et le décoration de verres ou de vitro-céramiques, et méthode de production d'une vitrocéramique revêtue avec celle-ci

(30) Priorität: 01.08.1998 DE 19834801
(43) Veröffentlichungstag der Anmeldung: 09.02.2000
(73) Patentinhaber: Schott Glas, 55122 Mainz (DE); Carl-Zeiss-Stiftung trading as Schott Glas, 55122 Mainz (DE)
(72) Erfinder: Mitra, Ina, 55271 Stadecken-Elsheim (DE); Siebers, Friedrich, Dr., 55283 Nierstein (DE); Reichert, Jutta, Dr., 82166 Gräfeling (DE); Krause, Cora, Dr., 76879 Essingen (DE); Becker, Otmar, Dr., 63225 Langen (DE); Bug, Michael, Dr., 64287 Darmstadt (DE)

(56) Entgegenhaltungen:
- EP-A- 0 460 863
- EP-A- 0 879 801
- DE-C- 19 512 847
- GB-A- 2 301 100
- JP-A- 59 203 737

## Beschreibung

Die Erfindung betrifft blei- und cadmiumfreie Glaszusammensetzungen zum Glasieren, Emaillieren und Dekorieren von Gläsern oder Glaskeramiken, die eine niedrige Wärmeausdehnung von weniger als 2 x 10⁻⁶/K zwischen 20 und 700°C aufweisen und sie betrifft Verfahren zur Herstellung einer mit diesen Glaszusammensetzungen versehenen Glaskeramik.

Übliche Glaskeramiken enthalten Hochquarz- und/oder Keatit-Mischkristalle als Hauptkristallphase, die für den niedrigen Wärmeausdehnungskoeffizienten verantwortlich sind. Je nach Kristallphase und Kristallitgröße können solche Glaskeramiken transparent, transluzent oder opak vorliegen. Die Einfärbung über Pigmente wird je nach gewünschter Anwendung, z. B. zur Erhöhung der Deckkraft oder zur Erzielung bestimmter Farbeindrücke, vorgenommen. Der gewünschte Farbeindruck kann aber auch über die Verwendung färbender Oxide, die sich im Glas lösen und somit eine gefärbte Glasur erzeugen, erreicht werden. Hauptsächliches Einsatzgebiet solcher Glaskeramiken mit niedriger Wärmedehnung sind temperaturwechselbeständige Laborgeräte, Kochgeschirre, Brandschutzgläser, Kaminsichtscheiben und besonders auch beheizbare Platten, z.B. Kochflächen.

Dekorüberzugsmassen werden im allgemeinen in die Kategorien "Glasuren" bzw. "Emails" eingeteilt. Die Glasuren bestehen in der Regel aus einem klaren oder eingefärbten Glas (Glasfluß), während Emails Überzugsmassen sind, die färbende, nichttransparente Materialien, wie Pigmente enthalten. Als Pigmente können farbige, anorganische Verbindungen verwendet werden. Hierbei dürfen die Pigmente üblicherweise vom Glasfluß nicht oder nur geringfügig angegriffen werden.

Glasuren und Emails werden auch zum Beschichten und Veredeln von Glaskeramiken eingesetzt. Großflächige Beschichtungen dienen oft dem Schutz, z. B. vor chemischem oder physikalischem Angriff, der Abdeckung oder zur Erzielung eines gewünschten Aussehens. Dekorationen werden eingesetzt für Beschriftungen, zur Erzielung eines gewünschten Designs oder auch zur Unterstützung bestimmter technischer Funktionen etwa im Fall von Display-Fenstern oder der Markierung von Kochzonen.

Die Glasur oder das Email wird bei Temperaturen, die unterhalb des Erweichungspunktes des zu beschichtenden Gegenstandes liegen, eingebrannt, wobei die jeweilige Glaszusammensetzung der Glasur bzw. des Emails aufschmilzt und sich stabil mit der Oberfläche des Gegenstandes verbindet. Die Einbrenntemperaturen liegen in der Regel unterhalb des Erweichungspunktes des zu beschichtenden Gegenstandes, damit keine unkontrollierte Verformung auftreten kann. Der Brand dient auch der Verflüchtigung organischer Hilfsstoffe, die z. B. als Suspendiermittel für den Auftrag der Glasur bzw. des Emails eingesetzt werden.

Bei einer Beschichtung von Glaskeramiken oder Gläsern mit einem Wärmeausdehnungskoeffizienten im Bereich von ca. 4 x 10⁻⁶/K und größer ist es möglich, Glasuren oder Emails mit angepaßten Wärmeausdehnungskoeffizienten zu finden. Dabei wird nach dem Stand der Technik angestrebt, daß die Dekorüberzüge einen geringfügig niedrigeren Wärmeausdehnungskoeffizienten aufweisen, als der zu beschichtende Gegenstand. Dadurch soll gewährleistet werden, daß die Glasur oder das Email beim Abkühlen nach dem Einbrand unter Druckspannung gerät und somit auf die Eigenschaften des Substrats keine negative, insbesondere die Festigkeit reduzierende Wirkung ausübt. Bei nichtangepaßten Wärmeausdehnungskoeffizienten werden sich beim Abkühlen Spannungen zwischen Dekorüberzug und Substrat ausbilden, wodurch Craquelles oder Risse entstehen, die bis in das Substratmaterial einlaufen können. Durch die Fehlanpassung werden die hervorgerufenen Spannungen die Haftfestigkeit verschlechtern. Bei größerer Fehlanpassung können die Dekorüberzüge sofort oder im Laufe der Zeit während des Gebrauchs vom Substrat abplatzen.

Probleme ergaben sich bisher bei der Glasur- bzw. Email-Dekoration von Glaskeramiken mit niedriger Wärmeausdehnung auf Basis von Hochquarzoder Keatit-Mischkristallen, die durch thermische Behandlung, der sogenannten Keramisierung, eines geeigneten Ausgangsglases hergestellt werden. Solche Glaskeramiken zeichnen sich durch eine Wärmeausdehnung von kleiner 2 x 10⁻⁶/K im Temperaturbereich zwischen 20 und 700°C aus. Unter Berücksichtigung des Erweichungspunktes und der thermischen Beständigkeit dieser Glaskeramiken wird die Dekoration üblicherweise bei Temperaturen unter 1200°C erfolgen. Bei den Glaskeramiken wird das Einbrennen der Glasur bzw. des Emails vorzugsweise während des Keramisierungsprozesses durchgeführt, d.h. die Dekorüberzüge werden auf das Grünglas aufgebracht und während der Keramisierung eingebrannt (Primäreinbrand). Bei einer zweiten Dekorierung oder aus fertigungstechnischen Gründen, wie z. B. bei kleinen Losgrößen, ist es fallweise wünschenswert, wenn das Einbrennen der Dekore in einer der Keramisierung nachgeschalteten, zweiten Temperaturbehandlung (Sekundäreinbrand) auf die bereits keramisierte Glaskeramik erfolgen kann. Wirtschaftlich vorteilhaft wäre es, wenn sich mit einer Email-, Glasur- oder Dekorzusammensetzung die gewünschten Eigenschaften sowohl im Primär- als auch im Sekundäreinbrand darstellen liesen. Für solche Glaskeramiken mit niedrigem Wärmeausdehnungskoeffizienten sind bisher keine wirtschaftlich herstellbaren Dekorüberzüge mit angepaßtem Wärmeausdehnungskoeffizienten verfügbar. Man hat auf verschiedenen Wegen versucht, dieses Problem der Fehlanpassung zu lösen, um das Auftreten gravierender Nachteile bei den gewünschten Eigenschaften zu umgehen.

Insbesondere bei vollflächigen Beschichtungen oder dichten Dekorierungen tritt die Erniedrigung der Biegezugfestigkeit als gravierender Nachteil zutage. Die Erniedrigung der Biegezugfestigkeit beruht zum einen auf der infolge der Fehlanpassung unvermeidlichen Ausbildung von Spannungen zwischen Dekor und Substrat und zum anderen darauf, daß für die Haftung des Dekors auf dem Substrat eine gewisse Anlösung des Substrats durch das Dekor und die Ausbildung einer Reaktionsschicht erforderlich ist. Es ist möglich, dieses Problem der Erniedrigung der Biegezugfestigkeit durch eine sehr lichte Dekorierung zu umgehen, jedoch sind damit vollflächige Beschichtungen zur Erzielung eines Schutzes oder dichtere Dekorierungen als Designausführung nicht möglich. Für eine ausreichende Biegezugfestigkeit beim Handling, Einbau und späteren Gebrauch der dekorierten Glaskeramiken wird eine mittlere Biegezugfestigkeit größer als 30 MPa als notwendig angesehen.

Beispielsweise durch Aufbringen von Dekorüberzügen mit geringen Schichtdicken können die resultierenden Spannungen auch bei Fehlanpassungen der Wärmeausdehnungskoeffizienten verringert werden. Dies bedeutet aber auch, daß die Farbwirkung (Deckkraft, Farbeindruck) sowie die Schutzwirkung erheblich eingeschränkt werden können.

Gegenüber dichter oder vollflächiger Dekorierung stellt sich die Abriebauffälligkeit von lichten Dekorierungen problematisch dar, da lichte Dekorpartien bei Beanspruchung verhältnismäßig höher belastet werden als dichte Ausführungen. Die gestalterischen Designfreiheiten, z. B. bei dezenter Dekorierung mit dünnen Linien und Punkten, sind somit stark eingeschränkt.

Bisher zum Überzug und/oder zur Dekoration von Glaskeramiken mit niedrigen Wärmeausdehnungskoeffizienten verwendete Glasuren und Emails enthalten häufig Blei und z.T. auch Cadmium. Neben seiner günstigen Wirkung hinsichtlich einer Erniedrigung der Einbrenntemperaturen erlaubt es die Verwendung von Blei und Cadmium gut haftende Dekorüberzüge zu realisieren, obwohl der Wärmeausdehnungskoeffizient in der Größenordnung von 5 x 10⁻⁶ /K bis sogar 10 x 10⁻⁶/K liegt. Die Ursache, warum diese Fehlanpassungen zwischen Dekorüberzug und Glaskeramik-Substrate ohne Schaden toleriert werden, wird der Plastizität bleihaltiger Flüsse zugeschrieben. Zusätze aus Blei und Cadmium sind darüber hinaus günstig für die Festigkeit dekorierter Glaskeramiken und verleihen den Glasflüssen und Emails eine vergleichsweise gute chemische Beständigkeit gegenüber schwachen Säuren und Basen, wie sie im Haushalt oder auch der Industrie als Reinigungsmittel eingesetzt werden oder in Lebensmitteln vorkommen.

Trotz dieser günstigen Eigenschaften bleihaltiger Beschichtungen dürfen Glasuren und Emails heute wegen der ungünstigen toxikologischen Eigenschaften von Blei und Cadmium diese Elemente nicht mehr enthalten. In der Literatur sind daher bereits verschiedene Wege vorgeschlagen worden, um Glaskeramiken mit niedriger Wärmeausdehnung ohne die Verwendung von Bleioder Cadmiumverbindungen zu beschichten.

In der deutschen DE 42 41 411 A1 wird versucht, das Problem der Fehlanpassung zwischen Glaskeramik-Substrat und Dekorschicht durch Zusatz von chemisch inerten, optisch inaktiven, elastischen anorganischen Stoffen zu lösen. Solche Zusätze bestehen z.B. aus Glimmerblättchen, die dem Dekorüberzug eine gewisse Plastizität verleihen. Durch diese Zusätze sind haftfeste und abriebarme Dekorüberzüge realisierbar. Nachteilig ist die aufwendigere Herstellung der Dekorüberzüge, sowie eine nicht immer gewünschte Beeinflussung von Farbton und Reflexion der Überzüge.

Aus der deutschen DE 42 01 286 C2 ist die Verwendung von blei- und cadmiumfreien Glaszusammensetzungen zum Glasieren und Emaillieren von Gläsern und Glaskeramiken mit einer Wärmeausdehnung von weniger als 5,0 x 10⁻⁶/K bekannt. Die vorgeschlagenen Zusammensetzungen enthalten Li₂O 0 - 12 Gew.-%, MgO 0 - 10 Gew.-%, CaO 3 - 18 Gew.-%, B₂O₃ 5 - 25 Gew.-%, Al₂O₃ 3 - 18 Gew.-%, Na₂O 3 - 18 Gew.-%, K₂O 3 - 18 Gew.-%, BaO 0 - 12 Gew.-%, SiO₂ 25 - 55 Gew.-%, TiO₂ 0 - 5 Gew.-% und ZrO₂ 0 - < 3 Gew.-%.

Die relativ hohen Gehalte an Alkalien und Erdalkalien, hier besonders K₂O und CaO, gestatten es, Dekorüberzüge mit guter Haftfestigkeit zu realisieren. Nachteilig sind die hohen Alkali- und Erdalkali-Gehalte für die chemische Beständigkeit gegenüber Säuren und im Hinblick auf die Festigkeit der dekorierten Glaskeramiken. Die beschriebenen relativ hohen Wärmeausdehnungskoeffizienten zwischen 10,18 bis 13,13 x 10⁻⁶/K werden ebenfalls durch die hohen Alkaligehalte hervorgerufen.

In der japanischen JP 59 20373A werden Gläser zum Verschmelzen von Fe-Ni-Co-Legierungen ("Kovac") und anderen Metall-Legierungen beschrieben. Die offenbarten Gläser enthalten u. a. K₂O 1,5 - 2,5 Gew.-%, die Ausführungsbeispiele nennen einen As₂O₃-Anteil von 0,1 - 0,3 Gew.-%. Der thermische Ausdehnungseffizient ist an die jeweiligen Metall-Legierungen angepaßt und beträgt 4,4 bis 4,8x10⁻⁶/K.

Die EP 0 460 863 A beschreibt Glasfritten zur Anwendung für Keramiken, z. B. für Porzellan. Der K₂O-Gehalt der Gläser liegt im Bereich von 0,5 - 3,5 Mol%. Den Beispielen ist ein K₂O-Gehalt an 1,5 bis 3,59 Gew.-% und ein Ca₂O₃-Gehalt bis zu 8.42 Gew.-% zu entnehmen. Der thermische Ausdehnungskoeffizient der offenbarten Gläser liegt zwischen 6,17 und 9,21x10⁻⁶/K.

Die US-PS 5,326,728 beansprucht eine bleifreie Fritte mit SiO₂ 35 - 50 Gew.-%, B₂O₃ 23 - 30 Gew.-%, Al₂O₃ 10 - 22 Gew.-%, Li₂O 1 - 3 Gew.-%, Na₂O 0 - 3 Gew.-%, K₂O 2 - 5 Gew.-%, CaO 1 - 5 Gew.-%, TiO₂ 0 - 2 Gew.-% und ZrO₂ 0 - 5 Gew.-%, wobei die Summe Li₂O + Na₂O + K₂O kleiner 8 Gew.-% und die Summe CaO + MgO + ZnO + BaO + SrO kleiner 7 Gew.-% ist. Auch bei diesen Zusammensetzungen sind Zusätze von K₂O und CaO erforderlich, um ausreichende Haftfestigkeiten trotz der Fehlanpassung zu erreichen. Für hohe Ansprüche an die Säurebeständigkeit und die Festigkeit der dekorierten Glaskeramiken sind diese Zusammensetzungen aber oft nicht ausreichend. Die Anwesenheit von K₂O in Mengen > 2 Gew.-% hat sich als äußerst schädlich für die Biegezugfestigkeit dekorierter Glaskeramiken erwiesen. Das Kalium-Atom ist sehr mobil beim Einbrand des Dekors und reichert sich in der Nähe der Reaktionsschicht zwischen Glaskeramik und Dekor an. Dadurch werden zusätzliche Spannungen erzeugt, die Biegezugfestigkeit deutlich erniedrigen. Die Anwesenheit von K₂O in Gehalten von 2 Gew.-% und größer gestattet zwar die Anwendung in Form lichter Dekorausführungen. Vollflächige Beschichtungen zum Schutz oder dichte Dekorierungen zur Erzielung von gewünschten ästhetischen Designausführungen sind damit jedoch nur eingeschränkt realisierbar. Die Begrenzung des Glasbildners SiO₂ auf maximal 50 Gew.-% in der Glasur ist ebenfalls nicht förderlich für das Erreichen einer hohen chemischen Beständigkeit und hohen Festigkeit des dekorierten Gegenstandes. Der relativ hohe Anteil an Al₂O₃ hat eine hohe Einschmelztemperatur zur Folge.

Die Glasuren nach EP 0 771 765 A1 setzen sich aus 30 - 94 Gew.-% Glasfritte, 5 - 69 Gew.-% TiO₂-Pulver und 0,05 - 34 Gew.-% Pigment zusammen. Dabei sind die BaO-Gehalte von 1 - 10 Gew.-% toxikologisch unerwünscht. Das zugesetzte TiO₂-Pulver muß besonderen Bedingungen, insbesondere Mahlfeinheit, genügen und bedeutet für den Gesamtprozeß der Glasurherstellung zusätzlichen Aufwand, den es zu vermeiden gilt. Aufgrund der Farbwirkung von TiO₂ - als Weißpigment - bedingt der Einsatz von TiO₂ eine Einschränkung in der farblichen Gestaltungsmöglichkeiten, insbesondere bei dunklen Farben.

Die Glasuren nach EP 0 776 867 A1 enthalten neben 40 - 98 Gew.-% Glasfritte und 1 - 55 Gew.-% Pigmente fakultativ einen zusätzlichen Füllstoff bis zu 54 Gew.-%, der in JP 7-61837 A zwingend zu 0,1 - 20 Gew.-% enthalten ist. Dieser Füllstoff besteht im wesentlichen aus den hochschmelzenden ZrO₂ und/oder ZrSiO₄, die neben dem zusätzlichen Verarbeitungsaufwand bei der Glasurherstellung, ein zügiges und gleichmäßiges Aufschmelzen der Glasur behindern. Die mit dem Einsatz von ZrO₂ und/oder ZrSiO₄ verbundene Färbung ist oft nicht erwünscht. Im Gegenzug zur Verwendung hochschmelzender Füllstoffe wird in der Glasfritte nach EP 0 776 867 A1 ein relativ hoher Na₂O-Gehalt von 5,1 - 15 Gew.-% eingesetzt, der der chemischen Beständigkeit der Glasur abträglich ist.

In der japanischen Schrift JP 9-30834 A werden Dekore beschrieben, die neben 55 - 95 Gew.-%. Glasfritte und 1 - 45 Gew.-% Pigment Füllstoffe bis zu 20 Gew.-% enthalten. In der Glasfritte sind 5 - 35 Gew.-% Bi₂O₃ enthalten, die zu einer teuren Glasur führen, da die Rohstoffe für Bi₂O₃ sehr teuer sind.

Bei der EP 0 509 792 A2 handelt es sich ebenfalls um eine Glasur aus dem Alkali-Erdalkali-Bor-Aluminium-SiO₂-System. Die Anwendung betrifft die Beschichtung von keramischen Körpern, wobei die Glasuren in der thermischen Ausdehnung ebenfalls an das keramische Substrat angepaßt sind. Weiterhin benötigen die angeführten Zusammensetzungen Einbrenntemperaturen von 950 - 1250°C. Es handelt sich demzufolge um Zusammensetzungen, die in ihrer Viskosität zäh sind.

Die DE 195 12 847 C1 hat Zusammensetzungen zur Verwendung in Glasuren und Emails zum Ziel, die über die Anpassung der thermischen Ausdehnung an das Glassubstrat die Realisierung dicker Schichten mit guter Farbwirkung erlauben. Von der thermischen Ausdehnung her sind die Gläser an Kalknatronglas mit einem Wärmeausdehnungskoeffizienten von 8 - 9 x 10⁻⁶/K angepaßt. Sämtliche Verarbeitungstemperaturen V_{A} der Anwendungsbeispiele liegen unterhalb 730°C, da die Einbrandtemperaturen wegen der Verformung des Glassubstrates unterhalb 700°C liegen sollen. Die Erfahrung besagt nun aber, daß es einen allgemeinen Zielkonflikt zwischen niedriger Einbrandtemperatur und chemischer Beständigkeit der Glasuren gibt. Mit Glaszusammensetzungen, die über eine solch notwendigerweise niedrige Einbrandtemperatur verfügen, lassen sich nicht die für die Glaskeramik-Beschichtung erforderlichen guten chemischen Beständigkeiten erreichen.

In den zitierten Schriften wird zuerst eine Glasfritte durch das Aufmahlen des erschmolzenen Glases hergestellt.

Durch Mahlung z.B. in Kugelmühlen wird eine Glasfritte mit einem mittleren Korndurchmesser kleiner 10 µm, bevorzugt kleiner 5 µm bzw. um 4 - 5 µm oder sogar 1 - 3 µm (DE 42 01 268 C2) hergestellt. Die Glasfritte wird ggf. mit handelsüblichen Pigmenten, Füll- und Zusatzstoffen versetzt und zu einer Masse mit der bestimmter Konsistenz verarbeitet, die für das gewählte Beschichtung- oder Auftragsverfahren erforderlich ist.

In den zitierten Schriften wird der direkte Siebdruck als eines von mehreren Verfahren gewählt.

Siebdruckfähige Pasten werden mit Hilfe von Suspendier- und Lösungmittel, z.B. Ethylzellulose und Siebdruckmedien, z.B. auf Basis von Fichtenöl, hergestellt. Die eingestellte Konsistenz der Paste bestimmt u.a. die Schichtdicke des Dekores nach dem Einbrand.

In den zitierten Schriften liegt die Spannbreite zwischen Mindest- und Höchtdicke der Schicht von 0,2 bis 20 µm ( EP 0 776 867 A1).

Die Aufgabe der Erfindung besteht daher darin, blei- und cadmiumfreie Glaszusammensetzungen zum Glasieren, Emaillieren und Dekorieren von Gläsern oder Glaskeramiken, die nach der Kristallisation eine niedrige Wärmeausdehnung von < 2 x 10⁻⁶/K zwischen 20 und 700°C aufweisen, vorzustellen, die allen Anforderungen genügen. Die Glaszusammensetzungen sollen insbesondere in einem niedrigen und relativ breiten Temperaturbereich problemlos verarbeitet werden können und darüber hinaus Glasuren bzw. Emails liefern, die für den Gebrauch im technischen und häuslichen Bereich sehr gute Eigenschaften bezüglich Haftfestigkeit, chemischer Beständigkeit gegenüber Säuren und Laugen, Glanz und Fleckunempfindlichkeit zeigen. Des weiteren ist es Aufgabe der Erfindung, daß die mit den Glaszusammensetzungen dekorierten Glaskeramiken sowohl in dichter als auch in lichter Dekorausführung eine geringe Abriebauffälligkeit besitzen, um für das Design gestalterische Freiheiten zu bieten. Ferner sollen die mit den Glaszusammensetzungen dekorierten Glaskeramiken hohe Festigkeiten besitzen. Der Einbrand auf die Gläser und Glaskeramiken, die Hochquarz- und/oder Keatit-Mischkristalle als Hauptkristallphase enthalten und eine niedrige Wärmedehnung von < 2 x 10⁻⁶/K aufweisen, soll sowohl mit dem Keramisierungsprozeß (Primäreinbrand) als auch auf dem bereits umgewandelten Trägermaterial (Sekundäreinbrand) erfolgen.

Diese Aufgabe wird durch die im Patentanspruch 1 beschriebene Glaszusammensetzung gelöst.

Es hat sich gezeigt, daß die erfindungsgemäße Glaszusammensetzung die Eigenschaften der PbO- und CdO-haltigen Glaszusammensetzungen bezüglich Haftfestigkeit, chemischer Beständigkeit, Festigkeit und geringer Abriebauffälligkeit erreicht. Bei vollflächig dekorierten Glaskeramiken erreicht die Biegezugfestigkeit nach dem Einbrand Werte größer als 30 MPa. Darüber hinaus ergeben sich sogar Vorteile hinsichtlich geringerer Fleckempfindlichkeit gegenüber Kontamination. Bei der erfindungsgemäßen Glaszusammensetzung werden viskositätsabsenkende Komponenten, wie Alkalien, B₂O₃ sowie ggf. Erdalkalien, ZnO und F in relativ engen Grenzen mit Oxiden kombiniert, die am Aufbau des Glasnetzwerks beteiligt sind, insbesondere SiO₂, Al₂O₃ ggf. mit geringen Anteilen an TiO₂, ZrO₂, La₂O₃, SnO₂, Sb₂O_{3,} Bi₂O₃ oder P₂O₅.

Die Summe der Alkalien Li₂O, Na₂O und K₂O soll zwischen 2 bis 12 Gew.-% liegen. Der Zusatz von Alkalien ist erforderlich, um die gewünschten niedrigen Einbrenntemperaturen zu erreichen. Neben der viskositätsabsenkenden Wirkung sind die Alkalien auch in hohem Maße für den Glanz der aufgebrachten Dekorschicht verantwortlich. Höhere Alkaligehalte verschlechtern die Säurebeständigkeit der aufgebrachten Schichten. Auch wirken sich höhere Alkaligehalte negativ auf die Festigkeit der beschichteten Glaskeramiken aus. Die thermische Ausdehnung des Glases wird deutlich erhöht. Der Li₂O-Gehalt ist auf 6 Gew.-% und der Na₂O-Gehalt ist auf 5 Gew.-% begrenzt. Der K_{z}O-Gehalt soll höchstens 1,3 Gew.-% betragen. K₂O ist günstig für die Haftfestigkeit der aufgebrachten Dekorschichten, ist aber weniger wirksam hinsichtlich der Absenkung der Viskosität. Ganz besonders negativ wirken sich höhere K₂O-Gehalte auf die Festigkeit der dekorierten Glaskeramiken aus. Bevorzugt wird ein Li₂O-Gehalt von 1 bis 5,8 Gew.-%, sowie ein Gesamtalkaligehalt von 2 bis 10 Gew.-%.

Der B₂O₃-Gehalt liegt zwischen 13 und 22 Gew.-%. B₂O₃-Zusätze sind erforderlich, um die Glasschmelze gegenüber unerwünschter Entglasung zu stabilisieren. B₂O₃ senkt die Viskosität des Glases und ermöglicht das Einbrennen bei niedrigen Temperaturen. B₂O₃ beeinflußt ferner den Glanz positiv. Bei höheren B₂O₃-Gehalten als 22 Gew.-% verschlechtert sich die Säurebeständigkeit der Beschichtung. Geringere Gehalte als 13 Gew.-% führen zu einem unzureichenden Viskositätsverhalten sowie einer verminderten Abriebfestigkeit. Besonders günstige Eigenschaften erhalten Glaszusammensetzungen mit einem B₂O₃-Gehalt von 14 bis 22 Gew.-%.

SiO₂ und in geringerem Umfang Al₂O₃ sind Hauptbestandteile des erfindungsgemäßen Glases. SiO₂ ist als Netzwerkbildner verantwortlich für die Stabilität, die chemische Beständigkeit und die Festigkeit. Der SiO₂-Gehalt liegt zwischen 50 und 65 Gew.-%. Höhere SiO₂-Gehalte sind ungünstig wegen ihrer viskositätserhöhenden Wirkung, sie verhindern das Glattfließen der Beschichtung beim Einbrennen und erhöhen die Einschmelztemperatur. Unterhalb von 50 Gew.-% ist die Säurebeständigkeit der Glaszusammensetzung zu gering. Bevorzugt wird ein SiO₂-Gehalt zwischen 51 bis 65 Gew.-%. SiO₂ wirkt sich günstig auf die Festigkeit der dekorierten Glaskeramiken aus. Der Al₂O₃-Gehalt liegt zwischen 3 und < 10 Gew.-%, bevorzugt zwischen 5 bis < 10 Gew.-%. Al₂O₃ fördert die Stabilität des Glases und die Festigkeit der dekorierten Glaskeramiken. Geringere Gehalte als 3 Gew.-% weisen unzureichende Festigkeitswerte auf. Höhere Gehalte an Al₂O₃ verschlechtern den Glanz, insbesondere erhöhen Gehalte über 10 Gew.-% die Viskosität des Glases merklich, was sich insbesondere beim Sekundäreinbrand negativ auswirkt. Für das zügige Aufschmelzen der Glasschicht und die ausreichende Ausbildung der Reaktionsschicht zwischen Glasur und Trägermaterial ist beim Verfahren des Sekundäreinbrandes eine relativ niedrige Viskosität des Glases erforderlich. Überraschend wird gefunden, daß mit Al₂O₃-Gehalten < 10 Gew.-% auch bei lichter Dekorierung eine geringe Abriebauffälligkeit darzustellen ist. Besonders günstige Eigenschaften erhalten Glaszusammensetzungen mit einem Al₂O₃-Gehalt von 5 bis < 10 Gew.-%.

Zusätze von Erdalkalien unterstützen die viskositätsabsenkende Wirkung der Alkalien. Glanz und Haftfestigkeit werden sogar verbessert. Als Zusätze sind maximal je 4 Gew.-% MgO, CaO und SrO, sowie aus toxikologischen Gründen maximal 1 Gew.-% BaO zulässig. Werden die angeführten Obergrenzen überschritten, verschlechtern sich Säurebeständigkeit und Festigkeit in unzulässiger Weise. In bevorzugter Form liegt die Summe der Erdalkalien bei 1 bis 9 Gew.-%.

Zur Verbesserung des Viskositätsverhaltens und des Abriebs kann die Glaszusammensetzung maximal 4 Gew.-% ZnO enthalten. Ein zu hoher ZnO-Gehalt führt allerdings zu einer Verschlechterung der Festigkeit.

Zur Verbesserung der Säurebeständigkeit kann das Glas ferner noch TiO₂ in Mengen zwischen 0 und 4 Gew.-%, bevorzugt zwischen 0 bis 3 Gew.-%, enthalten. Höhere TiO₂-Gehalte gefährden die Stabilität des Glases. ZrO₂ kann in Mengen bis zu 4 Gew.-%, bevorzugt bis zu 3 Gew.-% im Glas enthalten sein. ZrO₂-Zusätze fördern die chemische Beständigkeit gegenüber Laugen und die Festigkeit der dekorierten Glaskeramiken. Höhere Gehalte verschlechtern den Abrieb und gefährden die Stabilität des Glases gegenüber Entglasung.

Das Glas kann weiterhin Zusätze von Fluor in Höhe von bis zu 4 Gew.-%, bevorzugt bis zu 3 Gew.-% enthalten. Der Zusatz von F verringert die Viskosität und damit die Einbrenntemperatur. Fluor-Ionen ersetzen eine entsprechende Menge von Sauerstoff-Anionen im Glasgerüst. Höhere Gehalte verschlechtern jedoch die Säurebeständigkeit des Glases. Als weitere Zusätze können Bi₂O₃, La₂O₃, SnO_{2,} Sb₂O₃ und P₂O₅ in dem Glas vorhanden sein. Die maximale Menge der einzelnen Oxide soll 3 Gew.-% nicht überschreiten. Kommen mehrere dieser Oxide gemeinsam zur Anwendung, so soll die Summe der Gehalte dieser Oxide aber 5 Gew.-% nicht überschreiten. SnO₂-Zusätze verbessern die chemische Beständigkeit, führen jedoch zu einer Erhöhung der Viskosität. La₂O₃, Bi₂O₃ und P₂O₅ verbessern die Schmelzbarkeit, höhere Gehalte gefährden jedoch die Entglasungsstabilität und die chemische Beständigkeit. Sb₂O₃-Zusätze sind bis zu 3 Gew.-% zulässig und fördern die Haftfestigkeit der Dekorüberzüge. Höhere Gehalte sind toxikologisch unerwünscht und verschlechtern die Säurebeständigkeit.

Die Aufgabe der Erfindung wird besonders gut durch eine Glaszusammensetzung (in Gew.-%) gelöst, deren Gehalt an Li₂O zwischen 3 und 5,5, an Na₂O zwischen 0 und 4,5, an K₂O zwischen 0 und 1,3 (Summe der Alkalien Li₂O, Na₂O, K₂O zwischen 3 und 10), an MgO zwischen 0 und 2,5, an CaO zwischen 0,5 und 3,5, an SrO zwischen 0,5 und 3,5, an ZnO zwischen 1,5 und 4, an B₂O₃ zwischen 18 und 22, an Al₂O₃ zwischen 5 und < 10, an SiO₂ zwischen 53 und 62, an ZrO₂ zwischen 0,5 und 2,5 und an F im Austausch gegen O zwischen 0 und 2,5 liegt.

Glaspulver aus Gläsern der erfindungsgemäßen Zusammensetzung können problemlos mit Pigmenten bis zu einem Anteil von 30 Gew.-% Pigment vermischt und dann zur Herstellung farbiger Überzüge, Emails und/oder Dekore verwendet werden. Als Pigmente werden dabei übliche anorganische Materialien benutzt, die bei Brenntemperaturen gegenüber der Glaszusammensetzung im wesentlichen beständig sind. Durch gezielte Zugabe färbender Oxide, die sich in dem Glas lösen, kann die Glasur aber auch in sich gefärbt werden.

Die erfindungsgemäßen Gläser werden zuerst homogen erschmolzen und aus dem gebildeten Glas wird dann durch Mahlen ein Glaspulver mit einer mittleren Korngröße von < 10 µm, bevorzugt < 5 µm, hergestellt. Ausgehend von dem so erhaltenen Glaspulver werden dann, ggf. nach Zugabe entsprechender Pigmente, die zu dekorierenden Glaskeramiken beschichtet. Bei der Beschichtung werden allgemein bekannte technische Verfahren wie z.B. Tauchen, Spritzen, Siebdrucken usw. eingesetzt. Die Verarbeitung erfolgt unter Zusatz üblicher organischer Hilfsstoffe und/oder geeigneter Suspendiermittel. Zum Beispiel wird beim Siebdrucken das Pulver mit einem Siebdrucköl vermischt, die Paste mit einem Dreiwalzenstuhl homogenisiert und dann im direkten Siebdruck oder nach dem Abziehbildverfahren (indirekter Siebdruck) aufgetragen. Alternativ erlaubt das Vermischen mit thermoplastischen Hilfsstoffen einen Siebdruck unter Wärmeeinwirkung. Nach dem Einbrennen auf der zu dekorierenden Glaskeramik erhält man Schichten, deren Dicken üblicherweise zwischen 1 und 9 µm liegen. Die zu beschichtenden Glaskeramiken liegen sowohl im glasigen Ausgangszustand als auch im keramisierten Endzustand vor. Das Einbrennen der Glasur- bzw. Emailschichten wird sowohl während des Keramisierungsprozesses (Primäreinbrand) als auch auf dem bereits umgewandelten Trägermatieral (Sekundäreinbrand) durchgeführt. Die Zusammensetzungen der zu beschichtenden Glaskeramiken und der Keramisierungsprozeß werden in der Literatur z.B. in der EP 220 333 B1 beschrieben. Die Keramisierung erfolgt, je nachdem ob Hochquarz- oder Keatit-Mischkristalle als Hauptkristallphase gewünscht ist, im Temperaturbereich von 800 - 950°C bzw. 900 - 1200°C. Für das Erzielen einer ausreichenden Kristalldichte wird üblicherweise vor der Keramisierung eine Keimbildung bei Temperaturen zwischen 650 und 800°C vorgeschaltet. Besonders günstige Eigenschaften der aus den erfindungsgemäßen Gläsern hergestellten beschichteten Glaskeramiken erhält man dann, wenn man aus dem angegebenen Zusammensetzungsbereich Gläser auswählt, deren Transformations-, Erweichungs- und Verarbeitungstemperaturen deutlich höher liegen, als es dem bisherigen Stand der Technik entspricht. So liegen die Transformationstemperaturen (T_{g}) bei 400 - 650°C, insbesonders bei 425 - 590 °C, die Erweichungstemperaturen (E_{w}) bei 580 - 830°C, insbesonders bei 600 - 780 °C und die Verarbeitungstemperaturen (V_{A}) bei 840 - 1100 °C, insbesonders bei 850 - 1050 °C. Die Wärmeausdehnungskoeffizienten α zwischen 20 - 300°C liegen bei 3,5 bis 8 x 10⁻⁶/K, bevorzugt bei 4,0 bis 7,5 x 10⁻⁶/K. Die relativ hohen Temperaturen für Tg, E_{w}, V_{A} wirken sich besonders günstig auf die thermische Beständigkeit der Dekorüberzüge aus. So zeigt sich auch nach 75 Stunden bei 670°C praktisch keine visuell wahrnehmbare Farbveränderung.

Mit den erfindungsgemäßen Gläsern können auf Glaskeramik-Substraten Dekorüberzüge erzeugt werden, die bezüglich Glanz und Abriebbeständigkeit bisherigen PbO- und CdO-haltigen Gläsern entsprechen. Bezüglich thermischer Beständigkeit und Fleckunempfindlichkeit sind die erfindungsgemäßen Gläser den PbO- und CdO-haltigen Gläsern sogar überlegen. Ein besonderer Vorteil der erfindungsgemäßen Gläser besteht in ihrer ausgezeichneten Haftung, trotz der sehr großen Unterschiede in der Wärmeausdehnung zwischen Dekorüberzug und Glaskeramik-Substraten, sowie guter chemischer Beständigkeit und in der hohen Festigkeit der damit beschichteten Glaskeramiken. Selbst bei größeren Schichtdicken der Dekorüberzüge z.B. bis 9 µm zeigen sich auch bei Temperaturschock keine Abplatzungen von der Glaskeramik, wobei große Unterschiede in der Wärmeausdehnung zwischen Dekorüberzug und Glaskeramik toleriert werden. Diese gute Haftung wird über längere Zeiträume im praktischen Einsatz, verbunden mit extremen Temperaturwechseln, beibehalten. Die chemische Beständigkeit und hier besonders die Beständigkeit gegenüber Säuren ist gegenüber bisherigen bleifreien Zusammensetzungen vorteilhaft. Die Festigkeit der mit den erfindungsgemäßen Gläsern beschichteten Glaskeramiken ist besonders bei dichten Dekorausführungen gegenüber bisherigen bleifreien Zusammensetzungen deutlich verbessert. Vollflächig dekorierte Glaskeramik-Produkte besitzen nach dem Einbrand Biegezugfestigkeiten größer als 30 MPa.

Ein besonderer Vorteil der erfindungsgemäßen Gläser besteht darin, daß der Einbrand zum Glasieren, Emailieren und Dekorieren von Trägern aus Glaskeramiken, sowohl zusammen mit dem Keramisierungsprozeß (Primäreinbrand), als auch auf bereits in Glaskeramik mit niedrigem Ausdehnungsverhalten umgewandelte Träger (Sekundäreinbrand) vorgenommen werden kann.

Der nachgeschaltete Einbrand auf bereits in Glaskeramik umgewandelte Träger läuft üblicherweise bei Prozeßtemperaturen zwischen 800°C und 1200°C, bei Glaskeramiken mit Hochquarz-Mischkristallen als Hauptkristallphase üblicherweise zwischen 800°C und 950°C ab.

Mit der erfindungsgemäßen Zusammensetzung wird das Erweichungsverhalten des Dekorglases bzw. Emails so eingestellt, daß bei den jeweiligen Prozeßtemperaturen ein glattes Aufschmelzen einerseits und anderseits eine ausreichende Standfestigkeit zur Erhaltung der Konturenschärfe des aufgebrachten Designs sichergestellt ist.

Ein weiterer Vorteil der erfindungsgemäßen Gläser besteht in der geringen Abriebauffälligkeit dieser Dekore nicht nur in vollflächiger sondern auch in lichterer Dekorierung wie z.B. Punkte und unregelmäßigen Strukturen, so daß die gestalterischen Freiheiten für das Design erweitert werden.

Die vorliegende Erfindung wird mit Hilfe der folgenden Beispiele weiter verdeutlicht:

Tabelle 1 enthält 9 unterschiedliche Glaszusammensetzungen in Gew.-% und die dazugehörigen Meßgrößen, die die Viskosität kennzeichnen, wie Transformationstemperatur (T_{g} in °C), Erweichungstemperatur (E_{w} in °C), die Verarbeitungstemperatur (V_{A} in °C) sowie den Wärmeausdehnungskoeffizienten α zwischen 200 und 300°C in 10⁻⁶/K. Die Glaszusammensetzungen 8 und 9 liegen außerhalb des erfindungsgemäßen Zusammensetzungsbereichs und sind zu Vergleichszwecken mit aufgeführt.

Die Gläser gemäß den Zusammensetzungen 1 bis 9 werden zu Pulvern mit einer mittleren Korngröße von 0,8 bis 3 µm vermahlen. Das so erhaltene Pulver wird gemäß Tabelle 2 (Beispiele 1 - 12 Primäreinbrand und 13 - 25 Sekundäreinbrand) mit handelsüblichen Pigmenten für Weiß, Grün, Blau, Braun und Schwarz der Firma Cookson-Matthey oder einem Weiß-Pigment der Firma Bayer (weiß_{B}), vermischt und unter Zusatz von Siebdrucköl auf Fichtenölbasis zu einer Siebdruckpaste verarbeitet. Es werden Viskositäten zwischen 1 und 7 Pa·s mit einem Brookfield-Rheometer gemessen. Mit den erhaltenen Pasten werden zu Glaskeramiken umwandelbare Ausgangsgläser bzw. bereits keramisiertes Trägermaterial (gem. EP 220 333 B1) bedruckt. Die durchgeführten Siebdrucke beinhalten sowohl verschiedene Dekorausführungen als auch vollflächig bedruckte Prüfmuster. Dabei wird ein Sieb der Maschenweite 150 T verwendet. Die Beschichtungen werden in einem kontinuierlichen Fertigungsofen oder einem Laborofen eingebrannt. Dabei findet in den Beispielen 1 bis 12 auch die Keramisierung des Ausgangsglases in eine Glaskeramik statt.

In Beispiel 10 erfolgt der Dekoreinbrand bei Temperaturen zwischen 1060 und 1140°C. Das Trägermaterial in den Beispielen 13 bis 23 und 25 wird vor der Dekorierung nach dem in EP 220 333 B1 beschriebenen Verfahren der Wärmebehandlung zwischen 680°C und 920°C in eine Glaskeramik umgewandelt. In Beispiel 24 erfolgt die Umwandlung in Glaskeramik zwischen 1060°C und 1140°C. Der Dekoreinbrand in den Beispielen 13 bis 22, sowie 24 und 25 erfolgt bei einer Temperatur zwischen 840°C und 920°C. Der Dekoreinbrand in Beispiel 23 erfolgte bei Temperaturen zwischen 1060°C und 1140°C.

Die Beispiele 11, 12 und 25 mit Glas Nr. 8 und Nr. 9 liegen außerhalb des beanspruchten Zusammensetzungsbereiches, sie erfüllen mindestens eine der genannten Eigenschaften nicht.

Nach dem Einbrand werden Schichtdicken in der Größenordnung 2,5 bis 4,5 µm gemessen.

Die Haftfestigkeit wird mittels transparentem Klebeband (Tesafilm® Typ 104, Fa. Beiersdorf) ermittelt: Nach dem Anreiben auf die Dekorschicht und ruckartigem Abreißen wird beurteilt, ob und wieviele Dekorpartikel am Klebefilm anhaften. Die Prüfung gilt bei keinen oder nur sehr wenigen am Klebefilm anhaftenden Partikel als bestanden (= in Ordnung, i.O.).

Die Biegefestigkeit wird nach der Doppelringmethode gemäß DIN 52300, Teil 5 an Probestücken mit einer Abmessung von 100 x 100 mm bestimmt, die in der Mitte in einer Fläche von 50 x 50 mm vollflächig beschichtet sind. Der Mittelwert der Festigkeit bei mindestens 12 Proben wird angegeben.

Die Abriebauffälligkeit wird an einem dekorierten Träger folgendermaßen getestet:

Neben der vollflächigen Dekorierung werden lichte Prüfraster mit Punkten von 1 mm Durchmesser und unregelmäßige Strukturen unterschiedlicher Formen mit maximal 1 mm Breite hergestellt und geprüft.

Die Probe wird mit handelsüblichem Schmirgelpapier, das mit 1,3 kg Last aufgedrückt wird, in rotierender Bewegung abgerieben. Nach 1400 Umdrehungen werden die Veränderungen des Dekores in den 4 Stufen "sehr gut", "gut", "nicht gut" und "schlecht" eingeteilt, wobei der Test mit "nicht gut" auch nicht bestanden ist.

Die gemessenen Werte zeigen, daß die erfindungsgemäßen Zusammensetzungen sowohl über gute Haftfestigkeiten als auch über gute Säurebeständigkeit und vergleichsweise hohe Biegefestigkeiten (> 30 MPa) verfügen. Des weiteren eignen sich die erfindungsgemäßen Gläser hervorragend zum Einbrand auf Gläser und Glaskeramiken, die Hochquarz- und/oder Keatit-Mischkristalle als Hauptphase enthalten und eine niedrige Wärmedehnung von < 2 x 10⁻⁶/K aufweisen, sowohl mit dem Keramisierungsprozeß (Primäreinbrand) als auch auf dem bereits umgewandelten Trägermaterial (Sekundäreinbrand). Die so eingebrannte Glasur-, Email, und Dekorschicht zeichnet sich durch eine geringe Abriebauffälligkeit auch in lichter Dekorausführung aus. Diese Kombination wird mit den Vergleichszusammensetzungen nicht erreicht. Die genannten Eigenschaften kommen denen PbO- und/oder CdO-haltiger Glasuren und Emails nahe. Darüber hinaus weisen die Zusammensetzungen gegenüber diesen aber deutlich verbesserte Fleckunempfindlichkeit und thermische Beständigkeit auf. Auch Glanz, Beständigkeit gegenüber basischen Reinigungsmitteln und Reinigungsverhalten nach üblichen und bekannten Standardmethoden zeigen, daß die erfindungsgemäßen Glaszusammensetzungen in hervorragender Weise dafür geeignet sind, PbO- und CdO-haltige Gläser zu substituieren.

**Tabelle 1:**

| Glaszusammensetzung (in Gew.-%) und Eigenschaften | | | | | | | | | |
|---|---|---|---|---|---|---|---|---|---|
| Glas-Nr. | 1 | 2 | 3 | 4 | 5 | 6 | 7 | 8 | 9 |
| Li₂O | 2 | 3 | 4,4 | 2 | 2 | 3,3 | 4,6 | 1 | 1,1 |
| Na₂O | 4 | 2 | - | 4 | 4 | 4 | 4,1 | 4 | 9,2 |
| K₂O | 1 | 1 | - | - | 1,3 | | - | | 0,4 |
| MgO | 2 | - | 1,2 | 1 | - | 1 | 0,9 | - | - |
| CaO | - | - | 2 | - | 3 | 0,7 | 1,3 | - | - |
| SrO | 3 | - | 2 | 1 | - | 1,4 | 1,8 | - | - |
| BaO | - | 1 | 1 | - | - | - | - | - | 2,6 |
| ZnO | 3 | 1 | 3 | 2 | - | 1,1 | 0,2 | - | - |
| B₂O₃ | 22 | 17 | 17,6 | 20 | 22 | 19,9 | 17,5 | 21 | 19,1 |
| Al₂O₃ | 6 | 8,8 | 9 | 6,4 | 9,8 | 6 | 6 | 16 | 5 |
| Bi₂O₃ | - | - | 2 | - | 1,4 | - | - | - | - |
| La₂O₃ | - | 1 | - | - | 2,6 | - | - | - | - |
| SiO₂ | 55 | 61,4 | 54 | 61 | 52 | 60,5 | 60,3 | 54 | 62,4 |
| TiO₂ | - | 2 | - | - | - | - | - | 1 | - |
| ZrO₂ | 2 | - | 1 | - | - | 1 | 2,1 | 1 | - |
| SnO₂ | - | - | - | 1 | 1,5 | - | - | - | - |
| P₂O₅ | - | - | - | 1 | - | - | - | - | - |
| Sb₂O₃ | - | 1,8 | 0,8 | - | 0,4 | - | - | - | - |
| F | - | - | 2 | 0,6 | - | 1,1 | 1,2 | 2 | 0,2 |
| | | | | | | | | | |
| T_{g}(°C) | 510 | 490 | 485 | 485 | 525 | 475 | 475 | 480 | 520 |
| E_{w}(°C) | 670 | 675 | 685 | 695 | 675 | 660 | 630 | 745 | 670 |
| V_{A}(°C) | 925 | 985 | 885 | 987 | 930 | 900 | 873 | 1144 | 933 |
| α_{20-300°C} (10⁻⁶/K) | 5,5 | 5,0 | 5,3 | 5,0 | 5,8 | 5,5 | 6,2 | 4,5 | 6,5 |

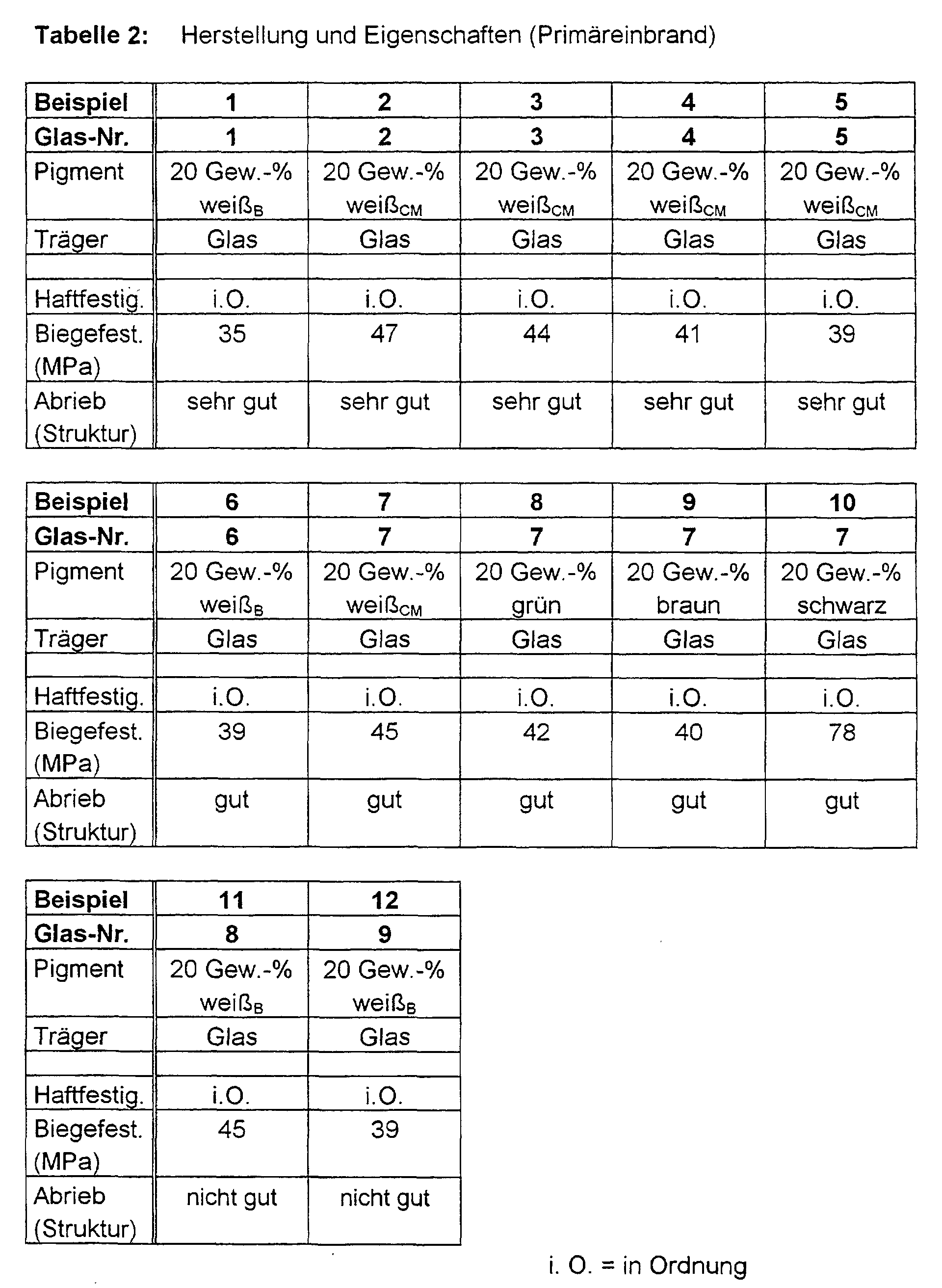

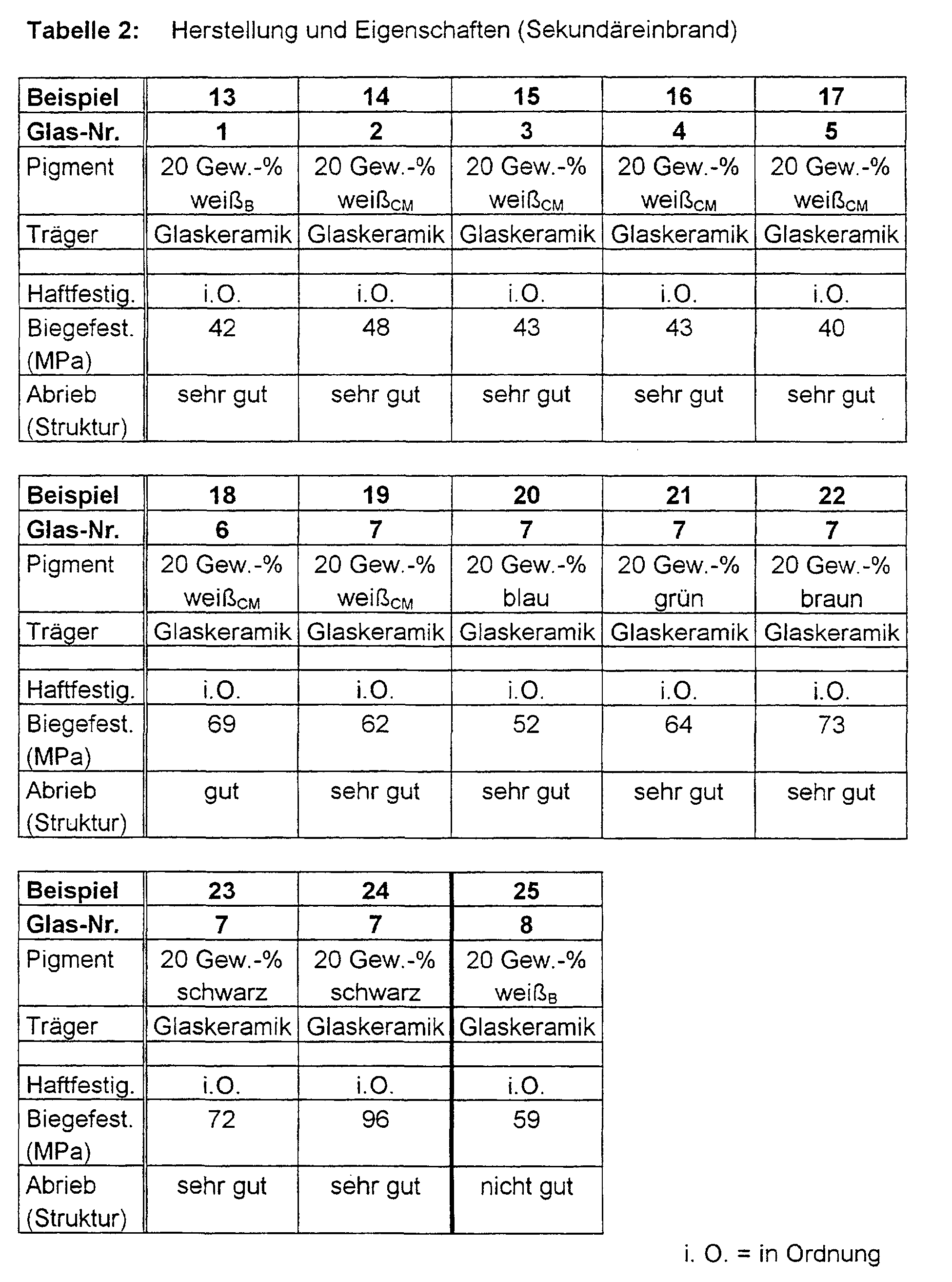

## Patentansprüche

1. Blei- und cadmiumfreies Glas zum Glasieren, Emaillieren und Dekorieren von Gläsern oder Glaskeramiken, die nach der Kristallisation eine niedrige Wärmedehnung von weniger als 2 x 10⁻⁶/K zwischen 20 und 700°C aufweisen,
**gekennzeichnet durch**
eine Zusammensetzung (in Gew.-%) von:
| | |
|---|---|
| Li₂O | 0 - 6 |
| Na₂O | 0 - 5 |
| K₂O | 0 - 1,3 |
| Σ Li₂O + Na₂O + K₂O | 2 - 12 |
| MgO | 0 - 4 |
| CaO | 0 - 4 |
| SrO | 0 - 4 |
| BaO | 0 - 1 |
| ZnO | 0 - 4 |
| Al₂O₃ | 3 - < 10 |
| B₂O₃ | 13 - 22 |
| SiO₂ | 50 - 65 |
| TiO₂ | 0 - 4 |
| ZrO₂ | 0 - 4 |
| F | 0 - 4 , im Austausch gegen Sauerstoff |
und mit bis zu 30 Gew.-% eines bei Brenntemperatur beständigen Pigmentes, wobei das Glas zum Glasieren, Emaillieren und Dekorieren sowohl zum Primär- als auch zum Sekundäreinbrand geeignet ist, und sowohl die vollflächige als auch die lichte Glasur-, Email- oder Dekorschicht nach dem Einbrand eine geringe Abriebauffälligkeit besitzt.

2. Glas nach Anspruch 1,
**gekennzeichnet durch**
eine Zusammensetzung (in Gew.-%) von:
| | |
|---|---|
| Li₂O | 1 - 5,8 |
| Na₂O | 0 - 5 |
| K₂O | 0 - 1,3 |
| Σ Li₂O + Na₂O + K₂O | 2 - 10 |
| MgO | 0 - 3 |
| CaO | 0 - 4 |
| SrO | 0 - 4 |
| BaO | 0 - 1 |
| ZnO | 0 - 4 |
| Al₂O₃ | 5 - < 10 |
| B₂O₃ | 14 - 22 |
| SiO₂ | 51 - 65 |
| TiO₂ | 0 - 3 |
| ZrO₂ | 0 - 3 |
| F | 0 - 3 , im Austausch gegen Sauerstoff |
und mit bis zu 30 Gew.-% eines bei Brenntemperatur beständigen Pigmentes.

3. Glas nach Anspruch 2,
**gekennzeichnet durch**
eine Zusammensetzung (in Gew.-%) von:
| | |
|---|---|
| Li₂O | 3 - 5,5 |
| Na₂O | 0 - 4,5 |
| K₂O | 0 - 1,3 |
| Σ Li₂O + Na₂O + K₂O | 3 - 10 |
| MgO | 0 - 2,5 |
| CaO | 0,5 - 3,5 |
| SrO | 0,5 - 3,5 |
| ZnO | 1,5 - 4 |
| Al₂O₃ | 5 - <10 |
| B₂O₃ | 18 - 22 |
| SiO₂ | 53 - 62 |
| ZrO₂ | 0,5 - 2,5 |
| F | 0 - 2,5 , im Austausch gegen Sauerstoff |
und mit bis zu 30 Gew.-% eines bei Brenntemperatur beständigen Pigmentes.

4. Glas nach Anspruch 1 oder 2,
**gekennzeichnet durch**
bis zu 3 Gew.-% eines oder mehrere der Oxide Sb₂O₃, SnO₂, La₂O₃, Bi₂O₃, P₂O₅, wobei die Summe der Oxide kleiner als 5 Gew.-% ist.

5. Glas nach wenigstens einem der Ansprüche 1 bis 4,
**gekennzeichnet durch**
Σ MgO + CaO + SrO + BaO 1 - 9 Gew.-%.

6. Glas nach wenigstens einem der Ansprüche 1 bis 5,
**gekennzeichnet durch**
einen Wärmeausdehnungskoeffizienten α_{20/300°C} bei 3,5 bis 8 x 10⁻⁶/K, insbesondere von 4,0 bis 7,5 x 10⁻⁶/K, Transformationstemperaturen von 400 - 650°C, insbesondere von 425 - 590 °C, Erweichungstemperaturen von 580 - 830°C, insbesondere von 600 - 780 °C und Verarbeitungstemperaturen von 840 - 1100 °C, insbesondere von 850 -1050 °C.

7. Glas nach wenigstens einem der Ansprüche 1 bis 6,
**dadurch gekennzeichnet,**
**daß** das Glas eine mittlere Korngröße < 10 µm, insbesondere < 5 µm aufweist.

8. Verfahren zur Herstellung einer mit einem Glas nach wenigstens einem der Ansprüche 1 bis 7 glasierten, emaillierten und dekorierten Glaskeramik,
**dadurch gekennzeichnet,**
**daß** das Einbrennen der Glasur-, Email- oder Dekorschicht zusammen mit dem Keramisierungsprozeß des zu glasierenden, emaillierenden und dekorierenden Glases zur Glaskeramik erfolgt (Primäreinbrand).

9. Verfahren zur Herstellung einer mit einem Glas nach wenigstens einem der Ansprüche 1 bis 7 glasierten, emaillierten und dekorierten Glaskeramik,
**dadurch gekennzeichnet,**
**daß** das Einbrennen der Glasur-, Email- oder Dekorschicht auf den bereits in Glaskeramik umgewandelten Träger erfolgt (Sekundäreinbrand).

10. Verfahren nach Anspruch 8 oder 9,
**dadurch gekennzeichnet,**
**daß** eine Schichtdicke der Glasur-, Email-, oder Dekorschicht nach dem Einbrand von < als 9 µm, insbesondere 1µm - 7µm eingestellt wird.

11. Verwendung eines Glases nach wenigstens einem der Ansprüche 1 bis 7, zum Glasieren, Emaillieren und Dekorieren von Gläsern oder Glaskeramiken, die nach der Kristallisation Hochquarz- und/oder Keatit-Mischkristalle als Hauptkristallphase enthalten und eine niedrige Wärmedehnung von weniger als 2 x 10⁻⁶/K zwischen 20 und 700°C aufweisen.

## Claims

1. Lead- and cadmium-free glass for glazing, enamelling and decorating glasses or glass-ceramics which, after crystallization, have a low coefficient of thermal expansion of less than 2 x 10⁻⁶/K at between 20 and 700°C, **characterized by** a composition (in % by weight) of:
| | |
|---|---|
| Li₂O | 0 - 6 |
| Na₂O | 0 - 5 |
| K₂O | 0 - 1.3 |
| Σ Li₂O + Na₂O + K₂O | 2 - 12 |
| MgO | 0 - 4 |
| CaO | 0 - 4 |
| SrO | 0 - 4 |
| BaO | 0 - 1 |
| ZnO | 0 - 4 |
| Al₂O₃ | 3 - <10 |
| B₂O₃ | 13 - 22 |
| SiO₂ | 50 - 65 |
| TiO₂ | 0 - 4 |
| ZrO₂ | 0 - 4 |
| F | 0 - 4 as replacement for oxygen |
and containing up to 30% by weight of a pigment which is resistant at the firing temperature, where the glass is suitable for glazing, enamelling and decoration in both primary and secondary firing, and both the full-area and sparse glaze, enamel or decoration layers have low abrasion susceptibility after firing.

2. Glass according to Claim 1, **characterized by** a composition (in % by weight) of:
| | |
|---|---|
| Li₂O | 1 - 5.8 |
| Na₂O | 0 - 5 |
| K₂O | 0 - 1.3 |
| Σ Li₂O + Na₂O + K₂O | 2 - 10 |
| MgO | 0 - 3 |
| CaO | 0 - 4 |
| SrO | 0 - 4 |
| BaO | 0 - 1 |
| ZnO | 0 - 4 |
| Al₂O₃ | 5 - <10 |
| B₂O₃ | 14 - 22 |
| SiO₂ | 51 - 65 |
| TiO₂ | 0 - 3 |
| ZrO₂ | 0 - 3 |
| F | 0 - 3 as replacement for oxygen |
and containing up to 30% by weight of a pigment which is resistant at firing temperature.

3. Glass according to Claim 2, **characterized by** a composition (in % by weight) of:
| | |
|---|---|
| Li₂O | 3 - 5.5 |
| Na₂O | 0 - 4.5 |
| K₂O | 0 - 1.3 |
| Σ Li₂O + Na₂O + K₂O | 3 - 10 |
| MgO | 0 - 2.5 |
| CaO | 0.5 - 3.5 |
| SrO | 0.5 - 3.5 |
| ZnO | 1.5 - 4 |
| Al₂O₃ | 5 - <10 |
| B₂O₃ | 18 - 22 |
| SiO₂ | 53 - 62 |
| ZrO₂ | 0.5 - 2.5 |
| F | 0 - 2.5 as replacement for oxygen |
and containing up to 30% by weight of a pigment which is resistant at firing temperature.

4. Glass according to Claim 1 or 2, **characterized by** a content of up to 3% by weight of one or more of the oxides Sb₂O₃, SnO₂, La₂O₃, Bi₂O₃ and P₂O₅, where the sum of the oxides is less than 5% by weight.

5. Glass according to at least one of Claims 1 to 4, **characterized by** Σ MgO + CaO + SrO + BaO = 1-9% by weight.

6. Glass according to at least one of Claims 1 to 5, **characterized by** a coefficient of thermal expansion α_{20/300°C} of from 3.5 to 8 x 10⁻⁶/K, in particular from 4.0 to 7.5 × 10⁻⁶/K, a transition temperature of 400-650°C, in particular 425-590°C, a softening point of 580-830°C, in particular 600-780°C, and a working point of 840-1100°C, in particular 850-1050°C.

7. Glass according to at least one of Claims 1 to 6, **characterized in that** the glass has a mean particle size of <10 µm, in particular <5 µm.

8. Process for the production of a glass-ceramic glazed, enamelled or decorated with a glass according to at least one of Claims 1 to 7, **characterized in that** the firing of the glaze, enamel or decoration layer is carried out together with the ceramicization process of the glass to be glazed, enamelled and decorated to give the glass-ceramic (primary firing).

9. Process for the production of a glass-ceramic glazed, enamelled or decorated with a glass according to at least one of Claims 1 to 7, **characterized in that** the firing of the glaze, enamel or decoration layer is carried out on the substrate which has already been converted into glass-ceramic (secondary firing).

10. Process according to Claim 8 or 9 **characterized in that** a layer thickness of the glaze, enamel or decoration layer of <9 µm, in particular 1 µm-7 µm, is set after firing.

11. Use of a glass according to at least one of Claims 1 to 7 for glazing, enamelling, decorating glasses or glass-ceramics which contain, after Claims 1 to 7 for glazing, enamelling, decorating glasses or glass-ceramics which contain, after crystallization, high-quartz and/or keatite mixed crystals as the main crystal phase and have a low coefficient of thermal expansion of less than 2 × 10⁻⁶/K at between 20 and 700°C.

## Revendications

1. Verre exempt de plomb et de cadmium pour le glaçage, l'émaillage et la décoration de verres ou de vitro-céramiques, comprenant, après la cristallisation, une faible dilatation thermique inférieure à 2 x 10⁻⁶/K entre 20 et 700°C,
**caractérisé par**
une composition (en % en poids) de :
| | |
|---|---|
| Li₂O | 0 - 6 |
| Na₂O | 0 - 5 |
| K₂O | 0 - 1,3 |
| Σ Li₂O + Na₂O + K₂O | 2 - 12 |
| MgO | 0 - 4 |
| CaO | 0 - 4 |
| SrO | 0 - 4 |
| BaO | 0 - 1 |
| ZnO | 0 - 4 |
| Al₂O₃ | 3 - < 10 |
| B₂O₃ | 13 - 22 |
| SiO₂ | 50 - 65 |
| TiO₂ | 0 - 4 |
| ZrO₂ | 0 - 4 |
| F | 0 - 4, en échange de l'oxygène |
et
comprenant jusqu'à 30 % en poids d'un pigment résistant à la température de cuisson, le verre pour le glaçage, l'émaillage et la décoration étant approprié pour la cuisson primaire de même que secondaire, et la couche de glaçage, d'émaillage ou de décoration sur une grande surface ou également éparse possède après la cuisson une faible susceptibilité à l'usure par frottement.

2. Verre selon la revendication 1,
**caractérisé par**
une composition (en % en poids) de :
| | |
|---|---|
| Li₂O | 1 - 5,8 |
| Na₂O | 0 - 5 |
| K₂O | 0 - 1,3 |
| Σ Li₂O + Na₂O + K₂O | 2 - 10 |
| MgO | 0 - 3 |
| CaO | 0-4 |
| SrO | 0 - 4 |
| BaO | 0 - 1 |
| ZnO | 0 - 4 |
| Al₂O₃ | 5 - < 10 |
| B₂O₃ | 14 - 22 |
| SiO₂ | 51 - 65 |
| TiO₂ | 0 - 3 |
| ZrO₂ | 0 - 3 |
| F | 0 - 3, en échange de l'oxygène |
et comprenant jusqu'à 30 % en poids d'un pigment résistant à la température de cuisson.

3. Verre selon la revendication 2,
**caractérisé par**
une composition (en % en poids) de :
| | |
|---|---|
| Li₂O | 3 - 5,5 |
| Na₂O | 0 - 4,5 |
| K₂O | 0 - 1,3 |
| Σ Li₂O + Na₂O + K₂O | 3 - 10 |
| MgO | 0 - 2,5 |
| CaO | 0,5 - 3, 5 |
| SrO | 0,5 - 3,5 |
| ZnO | 1,5 - 4 |
| Al₂O₃ | 5 - < 10 |
| B₂O₃ | 18 - 22 |
| SiO₂ | 53 - 62 |
| ZrO₂ | 0,5 - 2,5 |
| F | 0 - 2,5, en échange de l'oxygène |
et comprenant jusqu'à 30 % en poids d'un pigment résistant à la température de cuisson.

4. Verre selon la revendication 1 ou 2,
**caractérisé par**
jusqu'à 3 % en poids d'un ou de plusieurs des oxydes Sb₂O₃, SnO₂, La₂O₃, Bi₂O₃, P₂O₅, la somme des oxydes étant inférieure à 5 % en poids.

5. Verre selon au moins l'une des revendications 1 à 4, **caractérisé par**
Σ MgO + CaO + SrO + BaO 1 - 9 % en poids.

6. Verre selon au moins l'une des revendications 1 à 5, **caractérisé par**
un coefficient de dilatation thermique α_{20/300°C} de 3,5 à 8 x 10⁻⁶/K, en particulier de 4,0 à 7,5 x 10⁻⁶/K, des températures de transformation de 400 - 650°C, en particulier de 425 - 590°C, des températures de ramollissement de 580 - 830°C, en particulier de 600 - 780°C et des températures de traitement de 840 - 1100°C, en particulier de 850 - 1050°C.

7. Verre selon au moins l'une des revendications 1 à 6, **caractérisé en ce que**
le verre présente une granulométrie moyenne < 10 µm, en particulier < 5 µm.

8. Procédé de fabrication d'une vitro-céramique glacée, émaillée et décorée avec un verre selon au moins l'une des revendications 1 à 7, **caractérisé en ce que**
la cuisson de la couche de glaçage, d'émaillage ou de décoration s'effectue conjointement avec le procédé de céramisation du verre en vitro-céramique à glacer, émailler et décorer (cuisson primaire).

9. Procédé de fabrication d'une vitro-céramique glacée, émaillée et décorée avec un verre selon au moins l'une des revendications 1 à 7, **caractérisé en ce que**
la cuisson de la couche de glaçage, d'émaillage ou de décoration s'effectue sur le support déjà transformé en vitro-céramique (cuisson secondaire).

10. Procédé selon la revendication 8 ou 9,
**caractérisé en ce**
**qu'**on ajuste une épaisseur de couche de la couche de glaçage, d'émaillage ou de décoration après la cuisson de < à 9 µm, en particulier de 1 µm à 7 µm.

11. Utilisation d'un verre selon au moins l'une des revendications 1 à 7, pour le glaçage, l'émaillage et la décoration de verres ou de vitro-céramiques, qui comprennent, après la cristallisation, des cristaux mixtes de haut quartz et/ou de kéatite en tant que phase cristalline principale et présentent une faible dilatation thermique inférieure à 2 x 10⁻⁶/K entre 20 et 700°C.
